(19) Europäisches Patentamt
European Patent Office
Office européen des brevets

(11) Publication number: **0 384 208 B1**

# (12) EUROPEAN PATENT SPECIFICATION

(45) Date of publication of patent specification: **14.09.94**

(51) Int. Cl.$^5$: **C08L 25/04**, C08L 77/00, C08L 101/00, C08K 9/04

(21) Application number: **90102290.5**

(22) Date of filing: **06.02.90**

## (54) Resin composition.

(30) Priority: **10.02.89 JP 29680/89**
**21.02.89 JP 39353/89**
**31.03.89 JP 78166/89**

(43) Date of publication of application:
**29.08.90 Bulletin 90/35**

(45) Publication of the grant of the patent:
**14.09.94 Bulletin 94/37**

(84) Designated Contracting States:
**AT BE CH DE ES FR GB IT LI NL SE**

(56) References cited:
**EP-A- 0 276 988**
**EP-A- 0 324 398**
**US-A- 3 966 839**

**Chemical Abstracts, vol. 104, no.8, february 24, 1986, page 48, abstract no. 51817v, Columbus, Ohio, US; & JP-A-60 195 157**

**Chemical Abstracts, vol. 106, no. 24, June 5, 1987, page 39, abstract no. 197329a, Columbus, Ohio, US; & JP-A-61 204 270**

(73) Proprietor: **IDEMITSU KOSAN COMPANY LIMITED**
**1-1, Marunouchi 3-chome**
**Chiyoda-ku**
**Tokyo 100 (JP)**

(72) Inventor: **Nakano, Akikazu**
**1-34, Kitade 3-chome, Tadaoka-cho, Sem-boku-gun,**
**Osaka, (JP)**
Inventor: **Sumitomo, Takashi**
**16-2, Shirogane 2-chome**
**Sakura-shi, Chiba-ken (JP)**
Inventor: **Yamasaki, Komei**
**1660 Kamiizumi, Sodegaura-machi**
**Kimitsu-gun, Chiba-ken (JP)**
Inventor: **Funaki, Keisuke**
**216 Imazuasayama, Ichihara-shi**
**Chiba-ken (JP)**

(74) Representative: **Türk, Gille, Hrabal, Leifert**
**Brucknerstrasse 20**
**D-40593 Düsseldorf (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

BACKGROUND OF THE INVENTION

1. Field of the invention

This invention relates to a resin composition and more particularly, to a styrene-based resin composition that is available for heat resistant parts in automobiles, domestic electric appliances and electric and electronic devices, or heat resistant structural materials for industrial use, and an inorganic filler which is surface treated and is suitable for filling in a styrene-based polymer.

2. Description of the Related Arts.

A styrene-based polymer having a syndiotactic configuration shows excellent mechanical strength, heat resistance, solvent resistance and electric characteristics compared with a styrene-based polymer having an atactic configuration. Therefore, in recent years, various studies to formulate a styrene-based polymer having a syndiotactic configuration to improve heat resistance or a solvent resistant thermoplastic resin, have been carried out. For example, Japanese Patent Application Laid-Open No. 257950/1987, discloses a thermoplastic resin composition to which a polystyrene having a syndiotactic configuration is added in order to improve the heat resistance of the thermoplastic resin. However, while the composition obtained certainly has an improved heat resistance, its tensile strength and elongation performance are markedly lowered in a composition with a resin which has less affinity with As a result, the composition is not preferred polystyrene. As a result, the composition is not preferred depending on the use thereof due to its poorer physical properties. Furthermore, there are problems in not only lowering in physical properties but also in its appearance, such as peeling of the surface layer of a molded product.

In order to overcome the above problems, the present inventors previously proposed a technique in which a specific block copolymer is added to improve affinity and dispersibility when blending a styrene-based polymer having a syndiotactic configuration with a thermoplastic resin, which has less affinity for the styrene-based polymer. For example, a polyamide resin has been known to have excellent moldability and heat resistance, and sufficient rigidity. Therefore, it has been used as a molding material for various products such as domestic materials, and parts of electric and mechanical instruments. However, the polyamide resin has a disadvantage in terms of water resistance although it has the excellent properties as mentioned above.

An attempt has been made to overcome the above disadvantage by adding the above styrene-based polymer to the polyamide. When the above styrene-based polymer is blended with the polyamide, a block copolymer of polystyrene-polyamide is added thereto. In addition, when the above styrene-based polymer is blended with a polybutyleneterephthalate, a block copolymer of a polystyrene-polybutyleneterephthalate is added thereto. That is, this technique adds a block copolymer comprising a polystyrene and a resin to be blended with the polystyrene as a modifier. According to this technique, modification effects can be obtained to some extent, and mechanical properties are particularly improved compared with that disclosed in Japanese Patent Publication Laid-Open No. 257950/1987.

However, according to this technique, it is necessary to prepare a block copolymer previously when a blended material is prepared so there is a disadvantage in that complicated procedures are required for industrial production.

On the other hand, an attempt has been made by formulating an inorganic filler such as glass fiber to various synthetic resins to improve mechanical properties, particularly rigidity and heat resistance. However, a styrene-based polymer has insufficient adhesiveness with an inorganic filler, so various investigations have been made concerning additives to improve adhesiveness or a surface treating agent of the inorganic filler. As a result, surface treating agents have been developed such as those in which various aminosilane compounds are combined with resins of polyester, urethane, epoxy, acryl and vinyl acetate, and additives such as maleic acid anhydride-styrene copolymer. More specifically, there have been known a silane coupling agent for glass fiber which is used as a surface treating agent, and a styrene/maleic anhydride-styrene/glass fiber composition as a composition in which an additive is formulated (Japanese Patent Application Laid-Open No. 161836/1980 and Japanese Patent Publication No. 19097/1974). However, the improvements brought about by these have also been inadequate.

In addition, Japanese Patent Publications Laid-Open No. 257948/1987 and No. 182344/1989, proposed resin compositions in which an inorganic filler is added to a syndiotactic polystyrene, and an inorganic filler is added to a syndiotactic polystyrene/a thermo-plastic resin and/or a rubber, respectively, to improve heat

resistance and mechanical properties. However, the adhesiveness of the syndiotactic polystyrene and the inoragnic filler is also insufficient in these compositions, so improvements have been desired.

That is, in conventional attempts in which the surfaces of various inorganic fillers and additives are treated with various surface treating agents, adhesiveness with a styrene-based polymer, particularly with a syndiotactic polystyrene is insufficient. In particular, impact resistance is low so an improvement in impact resistance has been desired.

EP-A-324 398 describes a styrene-based resin composition containing

(A) a styrene-based resin with mainly syndiotactic configuation,

(B) a thermoplastic resin other than the styrene-based resin, and

(C) rubber - like polymer, or further

(D) an inorganic filler as main components.

It is described that such composition is good in heat resistance and further in other physical properties such as a packed resistance, stiffness, and so on.

## SUMMARY OF THE INVENTION

An object of the present invention is to provide a composition which has good affinity and dispersibility from a styrene-based polymer having a syndiotactic configuration and a thermoplastic resin.

A resin composition of the present invention comprises

(a) 5 to 95% by weight of a styrene-based polymer having a syndiotactic configuration,

(b) 95 to 5% by weight of a thermoplastic resin having at least one polar group selected from a carboxyl group, a hydroxyl group and an amino group at the terminal; and

(c) 0.01 to 15 parts by weight of a styrene-based copolymer obtained by copolymerizing a styrene or its derivative with a vinyl compound having an epoxy group in such an amount that the proportion of the vinyl compound is 0.01 to 30 mole%, based on the styrene-based copolymer of the component (c), or a styrene-based copolymer obtained by copolymerizing a styrene or its derivative with an $\alpha$, $\beta$-unsaturated carboxylic acid anhydride, in an amount of 0.01 to 5 mole%, based on the total amount of the copolymer provided that a styrene-butadiene block copolymer rubber (SBS) modified with maleic anhydride, rubbers obtained by partially or completely hydrogenating the butadiene portion of a styrene butadiene block copolymer (SEBS) modified with maleic anhydride, a styrene-isoprene block copolymer rubber (SIS) modified with maleic anhydride, and rubbers obtained by partially or completely hydrogenating the isoprene portion of a styrene-isoprene block copolymer (SEP) modified with maleic anhydride are excluded; based on 100 parts by weight of the above componets (a) and (b).

Furthermore, a styrene-based resin composition of the present invention comprises:

(a) 5 to 95% by weight of the above styrene-based polymer,

(d) 95 to 5% by weight of a polyamide, and

(e) 1 to 50 parts by weight of at least one block or graft copolymer selected from the group consisting of an A-B block copolymer, an A-grafted B copolymer and a B-grafted A copolymer, each of which is modified by graft polymerizing an unsaturated carboxylic acid or its derivatives, provided that a styrene-butadiene block copolymer rubber (SBS) modified with maleic anhydride, rubbers obtained by partially or completely hydrogenating the butadiene portion of a styrene butadiene block copolymer (SEBS) modified with maleic anhydride, a styrene-isoprene block copolymer rubber (SIS) modified with maleic anhydride, and rubbers obtained by partially or completely hydrogenating the isoprene portion of a styrene-isoprene block copolymer (SEP) modified with maleic anhydride are excluded;

based on 100 parts by weight of the above components (a) and (b), wherein A represents an atactic polystyrene and B represents at least one polymer selected from among polybutadiene, polyisoprene, hydrogenated polybutadiene and hydrogenated polyisoprene.

## DESCRIPTION OF THE PREFERRED EMBODIMENTS

The resin composition of the present invention comprises the main components (a), (b) and (c), or (a), (d) and (e).

Component (a) is a styrene-based resin with a syndiotactic configuration. The styrene-based resin having a syndiotactic configuration refers to a polymer with a stereo structure such that phenyl groups or substituted phenyl groups are located alternately as side chains at opposite positions relative to the main chain composed of carbon-carbon bonds. Tacticity is quantitatively determined by a nuclear magnetic resonance method using a carbon isotope ($^{13}$C-NMR method). The tacticity, as determined by the $^{13}$C-NMR method, is indicated in terms of proportions of structural units continuously connected to each other, i.e., a

diad in which two structural units are connected to each other, a triad in which three structural units are connected to each other, and a pentad in which five structural units are connected to each other. The styrene-based resin having a syndiotactic configuration has a syndiotactic configuration, such that the proportion in the racemic diad is at least 75% and is preferably at least 85%, or the proportion in a racemic pentad is at least 30% and is preferably at least 50%. The styrene-based resin includes polystyrene, poly(alkylstyrene), poly(halogenated styrene), poly(alkoxystyrene), poly(vinyl benzoic ester), and their mixtures or copolymers containing the above polymers as the main components.

Poly(alkylstyrene) includes poly(methylstyrene), poly(ethylstyrene), poly(isopropylstyrene), and poly(tert-butylstyrene).Poly(halogenated styrene) includes poly(chlorostyrene), poly(bromostyrene), and poly(fluorostyrene). Poly(alkoxystyrene) includes poly(methoxystyrene) and poly(ethoxystyrene). Of these, polystyrene, poly(p-methylstyrene), poly(m-methylstyrene), poly(p-tert-butylstyrene), poly(p-chlorostyrene), poly(m-chlorostyrene), poly(p-fluorostyrene) are the most preferred polymers. Copolymers of styrene and p-methylstyrene are the most preferred copolymers.

The molecular weight of the styrene-based resin of component (a), which is used in the present invention, is not critical. The weight average molecular weight is preferably at least 10,000 and most preferably at least 50,000. The molecular weight distribution can be either wide or narrow, and various kinds of distribution are available.

A styrene-based resin having syndiotactic configuration can be produced, for example, by polymerizing a styrene-based monomer (corresponding to the above styrene-based resin) using a catalyst containing a titanium compound, and a condensate of water and trialkylaluminum in the presence of an inert hydrocarbon solvent or in the absence of a solvent (Japanese Patent Application Laid-Open No. 187708/1987).

The component (b) of the present invention as mentioned above, is a thermoplastic resin having at least one polar group selected from a carboxyl group, a hydroxyl group and an amino group at the terminal(s). The thermoplastic resins include, for example, polyethyleneterephthalate, polypropyleneterephthalate, polybutyleneterephthalate, polycyclohexanedimethyleneterephthalate, polyoxyethoxybenzoate, polyethylenenaphthalate; a polyester prepared by copolymerizing the above polyester-constituting component with another acid component and/or a glycol component, for example, an acid component such as isophthalic acid, p-oxybenzoic acid, adipic acid, sebacic acid, glutaric acid, diphenylmethanedicarboxylic acid and dimer acid, and a glycol component such as hexamethyleneglycol, diethyleneglycol, neopentylglycol, bisphenol A and neopentylglycolalkyleneoxide adduct; an aromatic polyester-polyether block copolymer; an aromatic polyester-polylactone block copolymer; a broadly defined polyester such as polyarylate; a polyamide such as Nylon® 4, Nylon 3•4, Nylon 12, Nylon 6•10, Nylon 6, Nylon 6•6, Nylon 6•9, Nylon 5•10, Nylon 6•12, Nylon 6/6•6, Nylon 4•6, polyxylyleneadipamide, polyhexamethyleneterephthalamide, polyphenylenephthalamide, polyxylyleneadipamide/hexamethyleneadipamide, polyesteramide elastomer, polyetheramide elastomer, polyetheresteramide elastomer and dimeric acid copolymerized amide. Among these, particularly preferred polyesters include polyethyleneterephthalate (PET) and polybutyleneterephthalate (PBT), the polyarylate includes a polyarylate usually known as a U-polymer comprising bisphenol A and terephthalic acid, and the polyamides include Nylon 6, Nylon 6•6 and Nylon 4•6.

The composition of the present invention further comprises, as the component (c), a styrene-based copolymer obtained by copolymerising a styrene or its derivative with a vinyl compound having an epoxy group or a styrene-based copolymer obtained by copolymerising a styrene or its derivative with an $\alpha$ , $\beta$-unsaturated carboxylic acid anhydride. These styrene-based polymers include those having a weight average molecular weight of 10,000 to 800,000, preferably 50,000 to 500,000. If the weight average molecular weight is less than 10,000, dispersibility cannot be improved and mechanical properties are somewhat reduced. If the weight average molecular weight exceeds 800,000, the viscosity of the composition is also increased, thus moldability is reduced or an independent phase is formed in the composition, and therefore, the improved effects of affinity and dispersibility will be substantially lost.

The vinyl compound having an epoxy group copolymerized with the styrene compound (styrene or its derivative) for preparing the styrene-based polymer, in which the vinyl compound having an epoxy group is copolymerized, includes a copolymerizable unsaturated monomer having an epoxy group such as glycidyl methacrylate, glycidyl acrylate, vinyl glycidyl ether, allyl glycidyl ether, glycidyl ether of hydroxyalkyl (meth)acrylate, glycidyl ether of polyalkyleneglycol (meth)acrylate, glycidyl itaconate. The styrene-based polymer obtained by copolymerizing the copolymerizable unsaturated monomer having an epoxy group can be prepared by conventional bulk polymerization, solution polymerization, suspension polymerization or emulsion polymerization in which a radical polymerization reaction proceeds.

The vinyl compound having an epoxy group is copolymerized in such amount that the proportion of the vinyl compound is 0.01 to 30 mole %, preferably 0.1 to 20 mole % based on the styrene-based copolymer of the component (C). If the amount of the vinyl compound having an epoxy group is less than 0.01 mole

%, the effect of improving dispersibility is small and phase peel-off is caused, while if it exceeds 30 mole %, an independent phase is formed so that the improved effects of affinity and dispersibility are substantially lost. Furthermore, gelation is caused, which is considered to be the result of the reaction of the epoxy groups.

Among the styrene-based polymer obtained by copolymerizing the above vinyl compounds having an epoxy group, a copolymer of glycidyl methacrylate and styrene is particularly preferred.

The composition of the present invention may include a styrene-based copolymer obtained by copolymerizing a styrene or a styrene derivative with an $\alpha$, $\beta$-unsaturated carboxylic acid anhydride, as the component (c). The $\alpha$, $\beta$-unsaturated carboxylic acid anhydride may be any monomer provided it is copolymerizable with a styrene type compound and includes maleic anhydride, chloromaleic anhydride, citraconic anhydride, butenylsuccinic anhydride, and tetrahydrophthalic anhydride. The styrene-based copolymer obtained by copolymerizing these $\alpha$, $\beta$-unsaturated carboxylic acid anhydrides can be prepared by conventional bulk polymerization, solution polymerization, suspension polymerization or emulsion polymerization.

The $\alpha$, $\beta$-unsaturated carboxylic acid anhydride is copolymerized in the styrene-based copolymer in an amount of 0.01 to 5 mole %, preferably 0.1 to 3 mole %, based on the total amount of the copolymer. If the amount of the $\alpha$, $\beta$-unsaturated carboxylic acid anhydride is less than 0.01 mole %, the effect of improving dispersibility is small, and phase peel-off sometimes occurs, while if it exceeds 5 mole %, an independent phase is formed so that the improved affinity and dispersibility are lost.

Among the styrene-based copolymers obtained by copylymerizing the above $\alpha$, $\beta$-unsaturated carboxylic acid anhydride with the styrene compound, a copolymer of maleic anhydride and styrene is particularly preferred. The copolymer is commercially available as Moremax® series produced by Idemitsu Petrochemical Co., Ltd.

In the resin composition of the present invention, 5 to 95% by weight, preferably 10 to 90% by weight of the styrene-based polymer having a syndiotactic configuration as the above component (a) and 95 to 5% by weight, preferably 90 to 10% by weight of the thermoplastic resin as component (b) are blended. If the amount of the thermoplastic resin exceeds 95% by weight, heat resistance, rigidity and chemical resistance of the resulting composition are lowered, while if it is less than 5% by weight, mechanical properties are lowered.

The resin composition of the present invention (first invention) is prepared by adding 0.01 to 15 parts by weight, preferably 0.1 to 10 parts by weight of the component (c) to 100 parts by weight of the mixture containing the above components (a) and (b), in the ratio defined above. If the amount of component (c) is less than 0.01 part by weight, the effect of improving dispersibility is small, while if it exceeds 15 parts by weight, it is more than required, thus causing gelation or impairing heat resistance.

When the resin component which is blended with the styrene-based polymer having syndiotactic configuration is a polyamide, there may be mentioned, as preferred resin compositions, a resin composition which mainly comprises (a) 5 to 95% by weight of a styrene-based polymer having a syndiotactic configuration, (d) 95 to 5% by weight of the polyamide and (e) 1 to 50 parts by weight of at least one of a block and graft copolymer selected from the group consisting of the A-B type block copolymer, the A-grafted B copolymer and the B-grafted A copolymer (wherein A and B have the same meanings as defined above), each of which is modified by graft polymerizing an unsaturated carboxylic acid or its derivatives, based on 100 parts by weight of (a) and (d) above components (hereinafter referred to as the second invention),

and a resin composition which mainly comprises (a) 5 to 95% by weight of the styrene-based polymer having a syndiotactic configuration, (d) 95 to 5% by weight of the polyamide, and (e) X part by weight of at least one of a block and graft copolymer selected from the group consisting of the A-B type block copolymer, the A-grafted B copolymer and the B-grafted A copolymer (wherein A and B have the same meanings as those defined above), each of which is modified by graft polymerizing an unsaturated carboxylic acid or its derivatives and (f) Y part by weight of at least one of a block and graft copolymers selected from the group consisting of the A-B type block copolymer, the A-grafted B copolymer and the B-grafted A copolymer (wherein A and B have the same meanings as those defined above; and X and Y satisfy the relations of

1 part by weight $\leqq X + Y \leqq$ 50 parts by weight,
1 part by weight $\leqq X \leqq$ 50 parts by weight, and
0 part by weight $\leqq Y \leqq$ 49 parts by weight,

simultaneously), based on 100 parts by weight of the components (a) and (d) above (hereinafter referred to

as the third invention).

The resin composition of the second invention comprises the main components (a), (d) and (e) as described above. The component (a) is a styrene-based polymer having the syndiotactic configuration mentioned above.

The polyamide to be used as the component (d) is not particularly limited and includes polyamides obtained by copolymerizing a diamine with a dicarboxylic acid, self-condensing an ω-amino acid, and ring-opening polymerizing a lactam. More specifically, there may be mentioned polyhexamethyleneadipamide, polyhexamethyleneazeramide, polyhexamethylenesebacamide, polyhexamethylenedodecanoamide, polybis-(4-aminocyclohexyl)methanedodecanoamide, polycaprolactam, polylauric lactam, poly-11-aminoundecanoic acid, metaxylyleneadipamide and copolymers thereof. The molecular weight of the polyamide is not particularly limited provided it is sufficient to form a molded product, and it can be optionally selected depending on the molded product to be formed or the molding method. It is generally 5,000 to 200,000, preferably 7,000 to 100,000 in number average molecular weight. If the molecular weight is too small, molding becomes difficult, and is therefore not preferred.

With respect to the blending ratio of components (a) and (d) in the above resin composition, 5 to 95% by weight, preferably 15 to 85% by weight of component (a) and 95 to 5% by weight, preferably 85 to 15% by weight of component (d) based on the total amount of (a) and (d) components are blended. If the amount of the styrene-based polymer having a syndiotactic configuration of component (a) is less than 5% by weight, the durability and the mechanical strength of the resulting composition are reduced, while if it exceeds 95% by weight, the hot water and steam resistance of the composition becomes insufficient.

The composition above further contains the block or graft copolymer as component (e), which is modified by graft copolymerizing unsaturated carboxylic acid or its derivatives. In component (e), various block copolymers can be used for modification. When the block copolymer is represented by A-B type, A is an atactic polystyrene and B is at least one or more polymer selected from among polybutadiene, polyisoprene, hydrogenated polybutadiene and hydrogenated polyisoprene.

Furthermore, in component (e), various graft copolymers can be modified, and when the graft copolymer used is represented by A and B above, it can be represented as a A-grafted B copolymer or a B-grafted A copolymer.

As component (e) of the resin composition the A-B block copolymer, the A-grafted B copolymer and B-grafted A copolymer can be used alone or combined.

In the above copolymer, the contents of A and B are not particularly limited, but 10 to 70 mole % of A and 90 to 30 mole % of B are preferred. If the content of A is less than 10 mole %, affinity with the styrene-based polymer is poor, while if it exceeds 70 mole %, the softness characteristic of the resulting composition is poor.

The block or graft copolymer mentioned herein are the same as the component (f) in the third invention mentioned below.

The component (e) above is modified by graft copolymerizing the unsaturated carboxylic acid or derivatives thereof to the above block or graft copolymer.

The unsaturated carboxylic acid and derivatives thereof include unsaturated monocarboxylic acids such as acrylic acid, methacrylic acid and α-ethylacrylic acid; and unsaturated dicarboxylic acids such as maleic acid, fumaric acid, itaconic acid, citraconic acid, tetrahydrophthalic acid, methyltetra-hydrophthalic acid, endobis-bicyclo (2.2.1) hept-5-en-2,3-dicarboxylic acid and methyl-endobis-bicyclo (2.2.1) hept-5-en-2,3-dicarboxylic acid.

Furthermore, derivatives of these unsaturated carboxylic acids such as acid halides, amides, imides, acid anhydrides and esters thereof are also used. More specifically, maleanil chloride, maleimide, maleic anhydride, chloromaleic anhydride, butenylsuccinic anhydride, tetrahydrophthalic anhydride, citraconic anhydride, monomethyl maleate, dimethyl maleate and glycidyl maleate. Among these, particularly preferred are unsaturated dicarboxylic acids and acid anhydrides thereof.

The component (e) of the composition is prepared by modifying the above block or graft copolymer by copolymerizing it with the above unsaturated carboxylic acid or derivatives thereof. Component (e) can be prepared by the preparative method which is conventionally used for producing a graft copolymer. The amount of the unsaturated carboxylic acid or derivatives thereof is not particularly limited, but is usually 0.01 to 10% by weight, preferably 0.05 to 5% by weight based on the block or graft copolymer. If the amount is less than 0.01% by weight, the mechanical properties of the resulting composition will be insufficient. While, if it exceeds 10% by weight, its reaction with component (d) will excessively proceed, causing gelation, and particularly in the third invention mentioned below, its affinity with the component (f) becomes poor.

In order to carry out graft copolymerization efficiently, the reaction is preferably carried out in the presence of a radical initiator. The radical initiators to be used include organic peroxides and diazo compounds, which are usually used. More specifically, they include benzoylperoxide, dicumylperoxide, di-tert-butylperoxide, tert-butylcumylperoxide, tert-butylhydroperoxide, cumenehydroperoxide and azobisisobutyronitrile. The amount of the radical initiators is 0.01% by weight or more, preferably 0.03 to 1% by weight based on the graft copolymer.

More specifically, the following preparatory process may be mentioned.

(1) A method in which a radical initiator and an unsaturated carboxylic acid or its derivative are added to a solution containing a block or graft copolymer, and the reaction is carried out by stirring at 40 to 200 °C for from several ten minutes to several hours or (2) a method in which each component was fused and kneaded in the absence of a solvent at 130 to 350 °C for from 20 seconds to 30 minutes, preferably from 40 seconds to 5 minutes.

Component (e) above is contained in the resin composition of the present invention in an amount of 1 to 50 parts by weight, preferably 5 to 30 parts by weight based on 100 parts by weight of components (a) and (b). If the amount of component (e) is less than 1 part by weight, the reinforcing effect of an interface between the components (a) and (b) is insufficient and its impact resistance is reduced, which if it exceeds 50 parts by weight, the rigidity of the composition is impaired, and gelation due to excessive reaction and surface roughness of the molding material are caused.

The composition of the second invention is a resin composition comprising components (a), (d) and (e) above in predetermined amounts, respectively.

The composition of the third invention is a resin composition blended, in addition to the above components (a), (d) and (e), a block or graft copolymer as the component (f). Component (f) is an unmodified block or graft copolymer which is component (e) before being modifying with the unsaturated carboxylic acid or its derivatives by graft copolymerization, and is the same as that mentioned above.

In the third invention, the blending ratios of components (a) and (d) are the same as that of the second invention. Furthermore, X part by weight of component (e) and Y part by weight of component (f) are blended to 100 parts by weight of components (a) and (b) to obtain the resin composition of the present invention. Here, X and Y should satisfy the following relationships simultaneously.

1 part by weight $\leqq X + Y \leqq$ 50 parts by weight,
1 part by weight $\leqq X \leqq$ 50 parts by weight and
0 part by weight $\leqq Y \leqq$ 49 parts by weight.

The total amount of X + Y of the components (e) and (f) is 1 to 50 parts by weight, preferably 5 to 40 parts by weight. If the total amount of X + Y is less than 1 part by weight, the impact resistance of the composition is reduced, while if it exceeds 50 parts by weight, the rigidity of the composition is low and moldability is poor. In addition, X is 1 to 50 parts by weight, preferably 5 to 40 parts by weight. If the amount X is less than 1 pars by weight, compatibility cannot be improved and impact resistance is also reduced. On the other hand, if it exceeds 50 parts by weight, rigidity and moldability are poor. Furthermore, the amount Y is 0 to 49 parts by weight, preferably 0 to 39 parts by weight. If it exceeds 49 parts by weight, rigidity and moldability are poor.

The resin composition of third invention can be obtained by blending components (a), (d), (e) and (f) in predetermined amounts.

The resin composition of the present invention basically comprises the above components, but various rubber-like polymers and/or inorganic fillers which are surface-treated as mentioned below or an untreated one, or various additives other than the above such as antioxidants, nuclear agents and lubricants can be used provided they do not impair the objects of the invention. Various rubber-like polymers can be used, but the most preferred is a rubber-like copolymer containing a styrene compound as a component such as a styrene-butadiene block copolymer rubber, a rubber in which a part or all of the butadiene portion of the styrene-butadiene block copolymer is hydrogenated, a styrene-butadiene copolymer rubber, a methyl acrylate-butadiene-styrene copolymer rubber, an acrylonitrile-butadiene-styrene copolymer rubber, and a methyl acrylate-acrylic acid-2-ethylhexyl acrylate-styrene copolymer rubber. These rubbers have good dispersibility with the styrene-based polymer having a syndiotactic configuration as component (a), because they contain styrene units. As a result, their physical properties are markedly improved.

The rubber-like polymers include natural rubber, polybutadiene, polyisoprene, polyisobutylene, Neoprene, ethylen-propylene copolymer rubber, polysulfide rubber, Thiokol rubber, acrylic rubber, urethane rubber, silicone rubber, and epichlorohydrin rubber.

In addition, the following (1) to (3) can be used as the rubber-like polymer. That is, there is (1) a resin polymer obtained by polymerizing at least one or more vinyl type monomers in the presence of a rubber-like polymer mainly comprising alkyl acrylate and/or alkyl methacrylate (alkyl acrylates). Here, the rubber-like polymer mainly comprising alkylacrylates is a copolymer obtained by reacting 70% by weight or more of the said alkyl acrylates with 30% by weight or less of the other vinyl monomer, which can be copolymerized with methyl methacrylate, acrylonitrile, vinyl acetate, styrene, etc. In this case, a polymer obtained by optionally adding a polyfunctional monomer such as divinylbenzene, ethylene dimethacrylate, triallyl cyanurate, triallyl isocyanurate as a cross-linking agent, and reacting them can also be contained. Specific examples of the rubber-like polymer to be included in (1) above include MAS elastomer (prepared by adding styrene to a rubber latex obtained by copolymerizing methyl methacrylate and butyl acrylate, and effecting graft copolymerization (commercially available products include EXL-2330 (trade mark) produced by Rohm & Haas Co., or M-101 (trade mark) produced by Kanegafuchi Chemical Industry Co., Ltd.).

There is also a resin polymer (2) prepared by polymerizing a copolymer obtained by copolymerizing alkyl acrylate and/or alkyl methacrylate and polyfunctional polymerizable monomer having a conjugated diene-type double bond with at least one vinyl type monomer. In order to obtain this copolymer, the vinyl monomer and a cross-linking agent can be added as in (1) above. Specific examples of rubber-like polymer belonging to the (2) above include an MABS elastomer such as a graft copolymer prepared by adding styrene and methyl methacrylate to a rubber latex, obtained by copolymerizing octyl acrylate and butadiene with a ratio of the former : the latter = 7 : 3, and then performing graft copolymerization; or an MBS elastomer (as commercially available produce, Metaburene C-223, (trade mark) produced by Mitsubishi Rayon Co., Ltd.), such as a graft copolymer prepared by adding styrene to a rubber latex, obtained by copolymerizing methyl methacrylate and butadiene, and then effecting graft copolymerization.

Furthermore, (3) may be mentioned as the other elastomer, or AABS elastomer (prepared by adding acrylonitrile and styrene to a rubber latex obtained by copolymerizing butadiene and alkyl acrylate, and then performing graft copolymerization), or SBR elastomer (prepared by adding styrene to polybutadiene and performing graft-copolymerization).

Various antioxidants can be used in the present invention, but particularly preferred are phosphorus antioxidants including monophosphites and diphosphites, and phenolic antioxidants. Typical examples of monophosphites are tris(2,4-di-tert-butylphenyl)phosphite, and tris(mono or dinonylphenyl )phosphite.

Preferred diphosphites are the phosphorus compounds represented by the formula:

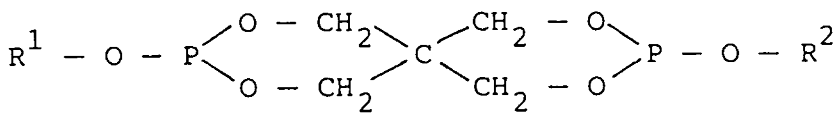

(wherein $R^1$ and $R^2$ are each an alkyl group having 1 to 20 carbon atoms, a cycloalkyl group having 3 to 20 carbon atoms, or an aryl group having 6 to 20 carbon atoms)

Typical examples of the phosphorus compounds represented by the above formula are distearylpentaerythritol diphosphite, dioctylpentaerythritol diphosphite, diphenylpentaerythritol diphosphite, bis(2,4-di-tert-butylphenyl)pentaerythritol diphosphite, bis(2,6-di-tert-butyl-4-methylphenyl)pentaerythritol diphosphite, and dicyclohexylpentaerythritol diphosphite and the like.

Various known compounds can be used as phenolic antioxidant. Representative examples of them are 2,6-di-tert-butyl-4-methylphenol, 2,6-diphenyl-4-methoxyphenol, 2,2'-methylenebis(6-tert-butyl-4-methylphenol), 2,2'-methylenebis(4-methyl-6-(α-methylcyclohexyl)phenol),1,1-bis(5-tert-butyl-4-hydroxy-2-methylphenyl)butane, 2,2'-methylenebis(4-methyl-6-cyclohexylphenol), 2,2'-methylenebis(4-methyl-6-nonylphenol), 1,1,3-tris(5-tert-butyl-4-hydroxyl-2-methylphenyl)butane, 2,2-bis(5-tert-butyl-4-hydroxy-2-methylphenyl)-4-n-dodecylmercaptobutane, ethyleneglycolbis(3,3-bis(3-tert-butyl-4-hydroxyphenol)butylate), 1,1-bis(3,5-dimethyl-2-hydroxyphenyl)-3-(n-dodecylthio)butane, 4,4'-thiobis(6-tert-butyl-3-methylphenol), 1,3,5-tris(3,5-di-tert-butyl-4-hydroxybenzyl)-2,4,6-trimethylbenzene, 2,2-bis(3,5-di-tert-butyl-4-hydroxybenzyl)malonic acid dioctadecyl ester, n-octadecyl-3-(4-hydroxy-3,5-di-tert-butylphenyl)propionate, and tetrakis(methylene(3,5-di-tert-butyl-4-hydroxyhydrocinnamyl)methane.

The above antioxidant is compounded in the amount of 0.0001 to 2 parts by weight, preferably 0.001 to 1 parts by weight per 100 parts by weight of the styrene-based resin having the syndiotactic configuration mentioned before.

Furthermore, a metal salt of an organic acid and/or an organic phosphorus compound can be added as the nuclear agent. These include various compounds, and the metal salt of the organic acid includes, for example, a metal salt such as sodium salt, calcium salt, aluminum salt or magnesium salt of an organic acid such as benzoic acid, p-(tert-butyl)benzoic acid, cyclohexane carboxylic acid (hexahydrobenzoic acid), aminobenzoic acid, β-naphthoeic acid, cyclopentane carboxylic acid, succinic acid, diphenylacetic acid, glutaric acid, isonicotinic acid, adipic acid, sebacic acid, phthalic acid, isophthalic acid, benzenesulfonic acid, glycolic acid, caproic acid, isocaproic acid, phenylacetic acid, cinnamic acid, lauric acid, myristic acid, palmitic acid, stearic acid and oleic acid. Among these, aluminum salt of p-(tert-butyl)benzoic acid, sodium salt of cyclohexane carboxylic acid and sodium salt of β-naphthoeic acid are particularly preferred.

In addition, the organic phosphorus compound includes an organic phosphorus compound ($b_1$) represented by the formula:

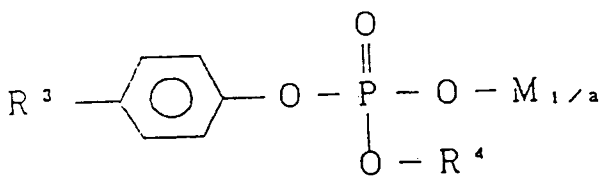
· · (B − I)

(wherein $R^3$ represents a hydrogen atom or an alkyl group having 1 to 18 carbon atoms; $R^4$ represents an alkyl group having 1 to 18 carbon atoms,

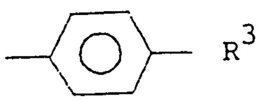

or $M_{1/a}$ ;
M represents Na, K, Mg, Ca or Al; and a represents an atomic valence of M)
or an organic phosphorus compound ($b_2$) represented by the formula:

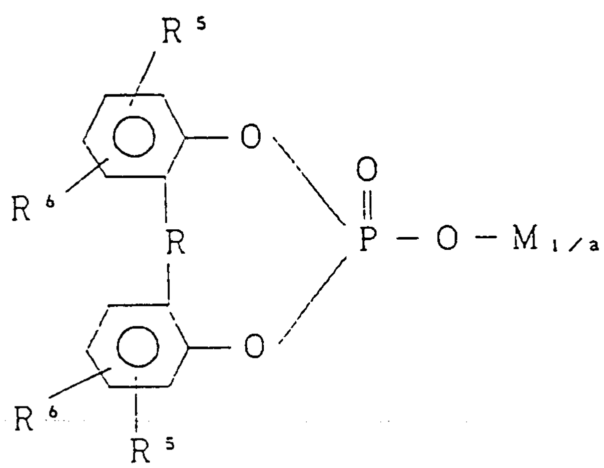
· · (B − II)

(wherein R represents methylene group, ethylidene group, propylidene group or isopropylidene group, $R^5$ and $R^6$ each represents a hydrogen atom or an alkyl group having 1 to 6 carbon atoms; and M and a have the same meanings as those defined above).

More detailed examples of the nuclear agent above are described in Japanese Patent Application Laid-Open No. 201350/1989. The amount is 0.01 to 15 parts by weight, preferably 0.05 to 5 parts by weight based on 100 parts by weight of components (a) and (b).

The resin composition of the present invention can be obtained by blending the respective components above and kneading them at an optional temperature, for example, 270 to 320 °C. Blending and kneading can be carried out by the conventional manner. More specifically, they can be carried out by the melt-kneading method or the solution blending method using a kneader, mixing roll, extruder, Banbury mixer,

Henschel mixer or kneading roll.

Various molding materials can be produced using the resin composition of the present invention. Shapes, molding process and crystallinity of the molding material are not particularly limited and can be determined depending on the characteristics required of the molding material to be produced. For example, the shape may be either a sheet-like or a three-dimensional structural material such as an container, and the molding process can be applied depending on the shape of the molding material, such as extrusion molding, injection molding, compression molding and blow molding. Furthermore, the degree of crystallization may be any of crystalline or amorphous.

According to the present invention, a polystyrene-based resin composition, which has improved affinity and dispersibility with no laminar peeling, excellent appearance and improved mechanical strength, can be obtained without complex process.

Accordingly, the present invention can be expected to be widely used for preparing various molding materials such as electric and electronic materials, industrial structural materials, domestic electric appliances, miscellaneous goods and automobile parts such as connectors, coil bobbins, printed circuit boards, door panels and cylinder head covers.

The present invention as claimed is described in greater detail with reference to the following examples.

REFERENCE EXAMPLE 1

(Preparation of Polystyrene having Syndiotactic Configuration)

32 L (L = liter) or toluene as a solvent, and 1335 mmol (as aluminum atom) of methylaluminoxane and 13.4 mmol of tetraethoxytitanium as catalyst components were placed in a reactor to which 15 kg of styrene was introduced and polymerized for 2 hours at 55 °C.

After polymerization, the reaction product was washed with a mixture of sodium hydroxide and methanol to decompose and remove the catalyst components, and was then dried to obtain 2.1 kg of a styrene polymer (polystyrene). The polymer was subjected to Soxhlet extraction using methyl ethyl ketone as a solvent to obtain 95% by weight of an extraction residue. The weight average molecular weight of the polymer was 400,000 and the melting point was 270 °C. A $^{13}$C-NMR analysis showed absorption at 145.35 ppm, which is ascribable to the syndiotactic configuration, and the syndiotacticity indicated in terms of a racemic pentad, as calculated from the peak area, was 98%.

REFERENCE EXAMPLE 2

(Preparation of Styrene-Maleic anhydride copolymer)

3.68 g of 1,1-bis(tert-butylperoxy)-3,3,5-trimethylcyclohexane as a polymerization initiator was added to 10 kg of styrene monomer and 0.35 kg of maleic anhydride. The resulting mixture was stirred and then allowed to stand at room temperature overnight, and was filtered through a filter paper to obtain a starting material for polymerization. After placing the styrene monomer inside an autoclave made of stainless steel and having a volume of 2 L, the temperature was raised to 100 °C and the starting material for polymerization was introduced into the autoclave at a rate of 8 ml/min, and 4 L of a liquid material was distilled from the autoclave. The viscous liquid material distilled after the above liquid material, was introduced to a large amount of hexane to precipitate a styrene-maleic anhydride copolymer resin. After removing the hexane, its composition was analyzed with a $^{13}$C-NMR to give the result of styrene/maleic anhydride = 99/1 mol %. In addition, the weight average molecular weight measured by a gel permeation chromatography (GPC) gave the result of 200,000.

EXAMPLE 1

One part by weight of a styrene-glycidyl methacrylate copolymer having a weight average molecular weight of 100,000 and the proportion of styrene/glycidyl methacrylate = 95/5 mol % was added to 100 parts by weight of a mixture comprising 70% by weight of the polystyrene having a syndiotactic configuration obtained in Reference Example 1 and 30% by weight of Nylon 6 (trade mark: Ube Nylon 1013B, produced by Ube Industries, Ltd.) as the polyamide. The mixture was pelletized after being melted, blended and kneaded at 280 °C and 50 rpm using a single-screw extruder having a Dalmage-type screw with a diameter of 20 mm and L/D = 20. These pellets were injection molded to form a test piece, which was then measured for various properties. The results are shown in Table 2. In addition, a non-oriented circular-shaped molding material having a diameter of 2.5 cm and a thickness of 4 mm was prepared from these pellets by using a press-molding machine. After this molding product was subjected to mirror polishing using an ultramicrotome, it was then etched with chromic acid and its dispersed state was observed using a scanning electron microscope. The results are shown in Table 2. The ratio of the composition is also shown in Table 1.

EXAMPLES 2 to 14 and COMPARATIVE EXAMPLES 1 to 8

The procedure of Example 1 was repeated with the exception that the ratio of the composition was replaced with those shown in Table 1 to produce molding products. Their physical properties measured are shown in Table 2.

The substances used in Examples and Comparative Examples are as follows:

Component (a)

SPS: Polystyrene having syndiotactic configuration obtained in Reference Example 1.

Component (b)

Nylon 6: Trade mark; Ube Nylon 1013 B, produced by Ube Industries, Ltd.
Nylon 6•6: Trade mark; Ube Nylon 2013, produced by Ube Industries, Ltd.
Polyarylate: Produced by Du Pont
PET: Polyethylene terephthalate, trade mark; Dianite MA-523, produced by Mitsubishi Rayon Co., Ltd.
PBT: Polybutylene terephthalate, trade mark; Balox 310, produced by Engineering Plastic K.K.

Component (c)

ST-GMA: Styrene-glycidyl methacrylate copolymer, the weight average molecular weight: 100,000, Copolymerization ratio of styrene/glycidyl methacrylate = 95/5 mole %, trade mark; Blenmer CP-1005S, produced by Nippon Oil & Fats, Co., Ltd.

SMA1: Styrene-maleic anhydride copolymer prepared in Reference Example 2.

SMA2: Styrene-maleic anhydride copolymer, the weight average molecular weight: 280,000, Copolymerization ratio of styrene maleic anhydride = 86/14 mole %, trade mark; Moremax UG 830, produced by Idemitsu Petrochemical Co., Ltd.

PS: Styrene homopolymer (containing no epoxy group nor carboxylic acid anhydride group), the weight average molecular weight: 300,000, trade mark; Idemitsu Polystyrene US 305, produced by Idemitsu Petrochemical Co., Ltd.

Other additives

GF: Glass fiber, chopped strand, average fiber diameter: 13 μm and average fiber length: 3 mm, produced by Asahi Fiber Glass K.K.

SBS: Styrene-butadiene block copolymer rubber-like elastomer, styrene/butadiene = 30/70 % by weight, the weight average molecular weight: 100,000, trade mark; Kraton D 1101.

Table 1

| No. | Component (a) | | Component (b) | | Component (c) | | Other additives | |
|---|---|---|---|---|---|---|---|---|
| | Kinds | % by weight | Kinds | % by weight | Kinds | Parts by weight | Kinds | Parts by weight |
| Example 1 | SPS | 70 | Nylon 6 | 30 | ST-GMA | 3 | - | 0 |
| Example 2 | Ditto | 50 | Ditto | 50 | Ditto | 3 | - | 0 |
| Example 3 | Ditto | 30 | Ditto | 70 | Ditto | 3 | - | 0 |
| Example 4 | Ditto | 80 | Ditto | 20 | SMA1 | 0.5 | - | 0 |
| Example 5 | Ditto | 15 | Ditto | 85 | Ditto | 5 | - | 0 |
| Comparative Example 1 | Ditto | 50 | Ditto | 50 | - | 0 | - | 0 |
| Comparative Example 2 | Ditto | 50 | Ditto | 50 | ST-GMA | 20 | - | 0 |
| Comparative Example 3 | Ditto | 15 | Ditto | 85 | SMA2 | 5 | - | 0 |
| Comparative Example 4 | Ditto | 15 | Ditto | 85 | PS | 5 | - | 0 |
| Example 6 | Ditto | 25 | Nylon 6·6 | 75 | ST-GMA | 1 | - | 0 |
| Example 7 | Ditto | 50 | Ditto | 50 | Ditto | 3 | GF | 43 |

Table 1 (continued)

| No. | Component (a) Kinds | Component (a) % by weight | Component (b) Kinds | Component (b) % by weight | Component (c) Kinds | Component (c) Parts by weight | Other additives Kinds | Other additives Parts by weight |
|---|---|---|---|---|---|---|---|---|
| Comparative Example 5 | SPS | 50 | Nylon 6•6 | 50 | - | 0 | GF | 43 |
| Example 8 | Ditto | 70 | Polyarylate | 30 | ST-GMA | 1 | - | 0 |
| Example 9 | Ditto | 70 | Ditto | 30 | Ditto | 2 | - | 0 |
| Example 10 | Ditto | 70 | Ditto | 30 | Ditto | 3 | - | 0 |
| Example 11 | Ditto | 70 | Ditto | 30 | Ditto | 5 | - | 0 |
| Comparative Example 6 | Ditto | 70 | Ditto | 30 | - | 0 | - | 0 |
| Example 12 | Ditto | 30 | Ditto | 70 | ST-GMA | 3 | SBS | 30 |
| Example 13 | Ditto | 25 | PET | 75 | Ditto | 3 | GF | 43 |
| Comparative Example 7 | Ditto | 25 | Ditto | 75 | - | 0 | GF | 43 |
| Example 14 | Ditto | 70 | PBT | 30 | ST-GMA | 2 | GF | 43 |
| Comparative Example 8 | Ditto | 70 | Ditto | 30 | - | 0 | GF | 43 |

Table 2

| No. | Visual observation: Appearance of injection molding product | Observation with electron microscope: Size of dispersed phase (μm) | JIS-K 7203: Bending strength (N/cm²) [(kgf/cm²)] | JIS-K 7207 or K 7206: Heat resistance (Thermal distortion temperature) (°C) | JIS-K 7207 or K 7206: Evaluation method |
|---|---|---|---|---|---|
| Example 1 | Good | 0.5 to 2.0 | 9810 [1000] | 249 | JIS-K 7206 (Vicat) |
| Example 2 | Good | 2.0 to 5.0 | 10791 [1100] | 238 | Ditto |
| Example 3 | Good | 1.0 to 3.0 | 9810 [1000] | 227 | Ditto |
| Example 4 | Good | 1.0 to 2.0 | 9810 [1000] | 246 | Ditto |
| Example 5 | Good | 2.0 to 3.0 | 10791 [1100] | 218 | Ditto |
| Comparative Example 1 | Phase separation | 5.0 to 30.0 | 8338.5 [850] | 233 | Ditto |
| Comparative Example 2 | Surface roughness | Uniform phase | 7749.9 [790] | 197 | Ditto |
| Comparative Example 3 | Surface roughness | 4.0 to 20.0 | 7848 [800] | 213 | Ditto |
| Comparative Example 4 | Phase separation | 5.0 to 30.0 | 7848 [800] | 207 | Ditto |
| Example 6 | Good | 2.0 to 5.0 | 10791 [1100] | 254 | Ditto |
| Example 7 | Good | - | 19620 [2000] | 250 | JIS-K 7207 Heavy load |

Table 2 (continued)

| No. | Visual observation: Appearance of injection molding product | Observation with electron microscope: Size of dispersed phase (μm) | JIS-K 7203: Bending strength (N/cm²) [(kgf/cm²)] | JIS-K 7207 or K 7206: Heat resistance (Thermal distortion temperature) (°C) | Evaluation method |
|---|---|---|---|---|---|
| Comparative Example 5 | Phase separation | - | 17658 [1800] | 246 | Ditto |
| Example 8 | Good | 1.0 to 7.0 | 9025.2 [920] | 243 | JIS-K 7206 (Vicat) |
| Example 9 | Good | 0.7 to 4.0 | 9515.7 [970] | 245 | Ditto |
| Example 10 | Good | 0.5 to 2.0 | 9810 [1000] | 242 | Ditto |
| Example 11 | Good | 0.2 to 2.0 | 9515.7 [970] | 240 | Ditto |
| Comparative Example 6 | Phase separation | 5.0 to 30.0 | 8142.3 [830] | 235 | Ditto |
| Example 12 | Good | 1.0 to 2.0 | 8338.5 [850] | 210 | Ditto |
| Example 13 | Good | - | 19620 [2000] | 239 | JIS-K 7207 Heavy load |
| Comparative Example 7 | Phase separation | - | 16677 [1700] | 233 | Ditto |
| Example 14 | Good | - | 14715 [1500] | 232 | Ditto |
| Comparative Example 8 | Phase separation | - | 12753 [1300] | 228 | Ditto |

REFERENCE EXAMPLE 3

(Preparation of maleic anhydride-modified styrene-hydrogenated butadiene-styrene block copolymer)

One kilogram of styrene-ethylene•butylene block copolymer (trade mark: Kraton G 1650, produced by Shell Chemical Co., Ltd.), 20 g of maleic anhydride and 5 g of dicumyl peroxide were subjected to dry blending at room temperature. The mixture was melted, kneaded and pelletized using a twin-screw extruder

with vent rotating in same direction (screw diameter of 30 mm and L/D = 22) at 300 °C and rotational frequency of 50 rpm to give a maleic anhydride-modified styrene-hydrogenated butadiene-styrene block copolymer.

Afterwards 2 g of the pellets obtained were pulverized. The resulting powders were subjected to Soxhlet extraction using 100 ml of acetone for 10 hours. Then, the residue was dried at 60 °C for 24 hours under a reduced pressure to obtain a sample. This sample had a specific absorption in the infrared spectrum (IR) at 1785 $cm^{-1}$, whereby graft copolymerization of maleic anhydride can be confirmed.

EXAMPLES 15 to 18

(a) Polystyrene having a syndiotactic configuration obtained by Reference Example 1, (d) Nylon 6•6, (e) maleic acid-modified styrene-hydrogenated butadiene-styrene block copolymer and (f) styrene-hydrogenated butadiene-styrene block copolymer were blended with the amounts shown in Table 3, and the mixture was kneaded and pelletized using a twin-screw extruder (having an inner diameter of 20 mm) at 300 °C, and then molded using an injection molding machine (trade mark: MIN-7, produced by Niigata Tekko K.K.). The Izod impact resistance with respect to the molded products was measured according to JIS K 7110.

A weight change rate (%) of the Izod test piece after being dipped in hot water and boiled for 8 hours was used as an index of hot water resistance. The vicat softening point was measured according to JIS K 7206. The results are shown in Table 4.

EXAMPLE 19

The procedure in Example 15 was repeated with the exception that components (d) is replaced with Nylon 6, and (e) is replaced with the maleic anhydride-modified styrene-hydrogenated butadiene-styrene block copolymer obtained in Reference Example 3 and the blending ratio was changed to that shown in Table 3. The results are shown in Table 4.

COMPARATIVE EXAMPLES 9 to 12

The procedure in Example 15 was repeated with the exception that the blending ratio was changed to that shown in Table 3. The results are shown in Table 4.

Table 3

| No. | Component (a) | | Component (d) | | Component (e) | | Component (f) | |
|---|---|---|---|---|---|---|---|---|
| | Kinds *1 | Parts by weight | Kinds | Parts by weight | Kinds | Parts by weight | Kinds | Part by weight |
| Example 15 | SPS | 70 | Nylon 6•6 *2 | 30 | Malein SEBS *4 | 20 | - | 0 |
| Example 16 | SPS | 50 | Nylon 6•6 *2 | 50 | Malein SEBS *4 | 20 | - | 0 |
| Example 17 | SPS | 30 | Nylon 6•6 *2 | 70 | Malein SEBS *4 | 20 | - | 0 |
| Example 18 | SPS | 70 | Nylon 6•6 *2 | 30 | Malein SEBS *4 | 5 | SEBS *6 | 15 |
| Example 19 | SPS | 30 | Nylon 6 *3 | 70 | Malein SEBS *5 | 20 | - | 0 |
| Comparative Example 9 | SPS | 100 | Nylon 6•6 *2 | 0 | Malein SEBS *4 | 20 | - | 0 |
| Comparative Example 10 | - | 0 | Nylon 6•6 *2 | 100 | - | 0 | - | 0 |
| Comparative Example 11 | SPS | 70 | Nylon 6•6 *2 | 30 | - | 0 | - | 0 |
| Comparative Example 12 | SPS | 70 | Nylon 6•6 *2 | 30 | - | 0 | SEBS *6 | 20 |

*1 ... Polystyrene having the syndiotactic configuration obtained in Reference Example 1
*2 ... trade mark: Ube Nylon 2023, produced by Ube Industries, Ltd.
*3 ... trade mark: Ube Nylon 1030, produced by Ube Industries, Ltd.
*4 ... Maleic acid-modified styrene-hydrogenated butadiene-styrene block copolymer, trade mark: Kraton FG-1901X, produced by Shell Chemical Co., Ltd.
*5 ... Maleic acid-modified styrene-hydrogenated butadiene-styrene block copolymer obtained in Reference Example 3
*6 ... Styrene-hydrogenated butadiene-styrene block copolymer, trade mark: Kraton G-1652, produced by Shell Chemical Co., Ltd.

Table 4

| No. | Izod impact resistance (J/cm²) [(kgf·cm/cm²)] | Weight change*[1] (%) | Vicat softening point (°C) |
|---|---|---|---|
| Example 15 | 46.11 [4.7] | 1.8 | 255 |
| Example 16 | 66.71 [6.8] | 2.3 | 248 |
| Example 17 | 133.42 [13.6] | 3.1 | 243 |
| Example 18 | 51.01 [5.2] | 1.7 | 255 |
| Example 19 | 147.15 [15.0] | 3.7 | 233 |
| Comparative Example 9 | 19.62 [2.0] | 1.5 | 259 |
| Comparative Example 10 | 48.07 [4.9] | 8.1 | 243 |
| Comparative Example 11 | 15.70 [1.6] | 1.9 | 257 |
| Comparative Example 12 | 22.56 [2.3] | 1.7 | 253 |

*1 ... $\text{Weight change (\%)} = \dfrac{\text{weight after dipping} - \text{weight before dipping}}{\text{weight before dipping}} \times 100$

REFERENCE EXAMPLE 4

(Preparation of Polystyrene having a Syndiotactic Configuration)

Two liters of toluene used as a solvent, and 5 mmol of tetraethoxytitanium and 500 mmol (as aluminum atom) of methylaluminoxane used as catalyst components were placed in a reactor, and 15 L of styrene was introduced thereinto and polymerised for 4 hours at 55 °C.

After polymerization, the reaction product was washed with a mixture of hydrochloric acid and methanol to decompose and remove the catalyst components, and then dried to obtain 2.5 kg of a styrene polymer (polystyrene). The polymer was subjected to Soxhlet extraction using methyl ethyl ketone as a solvent to obtain 97% by weight of an extraction residue. The weight average molecular weight of the polymer was 400,000, the number average molecular weight thereof was 180,000 and the melting point was 269 °C. A $^{13}C$-NMR analysis (solvent: 1,2-dichlorobenzene) showed an absorption at 145.35 ppm, which was ascribable to the syndiotactic configuration, and the syndiotacticity indicated in terms of racemic pentad calculated from the peak area was 98%.

EXAMPLE 20

To 100 parts by weight of the syndiotactic polystyrene obtained in Reference Example 4 were added 0.7 part by weight of (2,6-di-tert-butyl-4-methylphenyl) pentaerythritol diphosphite (trade mark: PEP-36, produced by Adeka Argus Co., Ltd.) and 0.1 part by weight of 2,6-di-tert-butyl-4-phenol (trade mark: Sumilizer BHT, produce by Sumitomo Chemical Co., Ltd.) as anti-oxidants and a further 1 part by weight of aluminum p-(tert-butyl)benzoate (trade name: PTBBA-A1, produced by Dainippon Ink & Chemicals Inc.) and 5 parts by weight of styrene-glycidyl methacrylate (5 mole %) copolymer (trade mark: Blenmer CP 1005S, produced by Nippon Oil & Fats, Co., Ltd., Mw = 10 x $10^4$) were added. The mixture was then dry blended. Then, while side feeding 43 parts by weight of glass fiber surface-treated with $\gamma$-aminopropyltrimethoxy silane (aminosilane-type coupling agent), the mixture was pelletized using a twin-screw extruder.

These pellets were injection molded to form test pieces for a bending test and a Izod test. Using the resulting test pieces, bending test, a thermal distortion test and Izod test were carried out. The results are shown in Table 6.

EXAMPLES 21 to 28 and COMPARATIVE EXAMPLES 13 to 17

The procedure in Example 20 was repeated with the exception that the components and the proportions thereof were changed as shown in Table 5. The results are shown in Table 6.

In addition, in Example 29, the procedure for Example 20 was repeated with the exception that, using Henschel mixer with 20 L-volume, 0.3 parts by weight of $\gamma$-aminopropyltriethoxy silane was sprayed to 100 parts by weight of talc and mixed at 60 to 100 °C and 1000 rpm for 5 minutes, then 50 parts by weight of said talc were added to 100 parts by weight of syndiotactic polystyrene at the time of dry blending.

Furthermore, in Example 30, the procedure in Example 29 was repeated except for replacing talc with calcium carbonate.

**Claims**

**1.** A resin composition which comprises

(a) 5 to 95% by weight of a styrene-based polymer having a syndiotactic configuration,

(b) 95 to 5% by weight of a thermoplastic resin having at least one polar group selected from a carboxyl group, a hydroxyl group and an amino group at the terminal, and

(c) 0.01 to 15 parts by weight of a styrene-based copolymer obtained by copolymerizing a styrene or a styrene derivative with a vinyl compound having an epoxy group in such amount that the proportion of the vinyl compound is 0.01 to 30 mole%, based on the styrene-based copolymer of the component (c), or a styrene-based copolymer obtained by copolymerizing a styrene or a styrene derivative with an $\alpha,\beta$-unsaturated carboxylic acid anhydride, in an amount of 0.01 to 5 mole%, based on the total amount of the copolymer, provided that a styrene-butadiene block copolymer rubber (SBS) modified with maleic anhydride, rubbers obtained by partially or completely hydrogenating the butadiene portion of a styrene butadiene block copolymer (SEBS) modified with maleic anhydride, a styrene-isoprene block copolymer rubber (SIS) modified with maleic anhydride, and rubbers obtained by partially or completely hydrogenating the isoprene portion of a styrene-isoprene

block copolymer (SEP) modified with maleic anhydride are excluded; based on 100 parts by weight of components (a) and (b) above.

2. A resin composition according to Claim 1, wherein the said styrene-based copolymer obtained by copolymerizing a styrene or a styrene derivative with a vinyl compound having an epoxy group is a styrene-based copolymer containing 0.01 to 30 mole % of the vinyl compound with an epoxy group and having a weight average molecular weight of 10,000 to 800,000.

3. A resin composition according to Claim 1, wherein the said styrene-based copolymer obtained by copolymerizing a styrene or a styrene derivative with an $\alpha,\beta$-unsaturated carboxylic acid anhydride is a styrene-based copolymer containing 0.01 to 5 mole % of the $\alpha,\beta$-unsaturated carboxylic acid anhydride and having a weight average molecular weight of 10,000 to 800,000.

4. A styrene-based resin composition which comprises:
(a) 5 to 95% by weight of a styrene-based polymer having a syndiotactic configuration,
(d) 95 to 5% by weight of a polyamide and
(e) 1 to 50 parts by weight of at least one block or graft copolymer selected from the group consisting of an A-B block copolymer, an A-grafted B copolymer and a B-grafted A copolymer, each of which is modified by graft polymerizing an unsaturated carboxylic acid or its derivatives, provided that a styrene-butadiene block copolymer rubber (SBS) modified with maleic anhydride, rubbers obtained by partially or completely hydrogenating the butadiene portion of a styrene butadiene block copolymer (SEBS) modified with maleic anhydride, a styrene-isoprene block copolymer rubber (SIS) modified with maleic anhydride, and rubbers obtained by partially or completely hydrogenating the isoprene portion of a styrene-isoprene block copolymer (SEP) modified with maleic anhydride are excluded; based on 100 parts by weight of components (a) and (d) above, (wherein A represents atactic polystyrene and B represents at least one polymer selected from polybutadiene, polyisoprene, hydrogenated polybutadiene and hydrogenated polyisoprene).

5. A styrene-based resin composition which comprises:
(a) 5 to 95% by weight of a styrene-based polymer having a syndiotactic configuration,
(d) 95 to 5% by weight of a polyamide and
(e) X parts by weight of at least one block or graft copolymer selected from the group consisting of an A-B block copolymer, an A-grafted B copolymer and B-grafted A copolymer each of which is modified by graft polymerizing an unsaturated carboxylic acid or its derivatives provided that a styrene-butadiene block copolymer rubber (SBS) modified with maleic anhydride, rubbers obtained by partially or completely hydrogenating the butadiene portion of a styrene butadiene block copolymer (SEBS) modified with maleic anhydride, a styrene-isoprene block copolymer rubber (SIS) modified with maleic anhydride, and rubbers obtained by partially or completely hydrogenating the isoprene portion of a styrene-isoprene block copolymer (SEP) modified with maleic anhydride are excluded; and
(f) Y part by weight of at least one block or graft copolymer selected from the group consisting of an A-B type block copolymer, an A-grafted B copolymer and a B-grafted A copolymer
(wherein A represents atactic polystyrene and B represents at least one polymer selected from among polybutadiene, polyisoprene, hydrogenated polybutadiene and hydrogenated polyisoprene; and X and Y satisfy the relations of

1 part by weight $\leqq$ X + Y $\leqq$ 50 parts by weight,
1 part by weight $\leqq$ X $\leqq$ 50 parts by weight and
0 part by weight $\leqq$ Y $\leqq$ 49 parts by weight,

simultaneously), based on 100 parts by weight of the above components (a) and (d).

**Patentansprüche**

1. Eine Harzzusammensetzung, die umfaßt
(a) 5 bis 95 Gew. % eines auf Styrol basierenden Polymeren mit einer syndiotaktischen Konfiguration,

(b) 95 bis 5 Gew. % eines thermoplastischen Harzes, das terminal zumindest eine polare Gruppe aufweist, ausgewählt aus einer Carboxylgruppe, einer Hydroxylgruppe und einer Aminogruppe, und
(c) 0.01 bis 15 Gew. % eines auf Styrol basierenden Polymeren, erhalten durch Copolymerisation eines Styrols oder eines Styrolderivats mit einer Vinylverbindung, die eine Epoxygrupe aufweist, in einer solchen Menge, daß der Anteil der Vinylverbindung 0.01 bis 30 Mol. % ist, bezogen auf das auf Styrol basierende Polymer der Komponente (c), oder eines auf Styrol basierenden Polymeren, erhalten durch Copolymerisation eines Styrols oder eines Styrolderivats mit einem $\alpha,\beta$-ungesättigten Carbonsäureanhydrid in einer Menge von 0.01 bis 5 Mol. %, bezogen auf die Gesamtmenge des Polymeren, vorausgesetzt daß ein mit Maleinsäureanhydrid modifizierter Styrol-Butadien-Blockcopolymer-Kautschuk (SBS), durch partielle oder komplette Hydrierung des Butadienteils eines mit Maleinsäureanhydrid modifizierten Styrol-Butadien-Blockcopolymeren (SEBS) erhaltene Kautschuks, ein mit Maleinsäureanhydrid modifizierter Styrol-Isopren-Blockcopolymer-Kautschuk (SIS) und durch partielle oder komplette Hydrierung des Isoprenteils eines Styrol-Isopren-Blockcopolymers erhaltene Kautschuks ausgeschlossen sind;
bezogen auf 100 Gew. Teile der obigen Komponenten (a) und (b).

**2.** Eine Harzzusammensetzung nach Anspruch 1, wobei das auf Styrol basierende Copolymer, das erhalten wird durch Copolymerisation eines Styrols oder eines Styrolderivats mit einer Vinylverbindung, die eine Epoxygruppe trägt, ein auf Styrol basierendes Copolymer ist, das 0.01 bis 30 Mol. % der Vinylverbindung mit einer Epoxygruppe enthält und ein massengemitteltes Molekulargewicht von 10,000 bis 800,000 aufweist.

**3.** Eine Harzzusammensetzung nach Anspruch 1, wobei das auf Styrol basierende Copolymer, das erhalten wird durch Copolymerisation eines Styrols oder eines Styrolderivats mit einem $\alpha,\beta$-ungesättigten Carbonsäureanhydrid ein auf Styrol basierendes Copolymer ist, das 0.01 bis 5 Mol. % des $\alpha,\beta$-ungesättigten Carbonsäureanhydrids enthält und ein massengemitteltes Molekulargewicht von 10,000 bis 800,000 aufweist.

**4.** Eine auf Styrol basierende Harzzusammensetzung, die umfaßt:
(a) 5 bis 95 Gew. % eines auf Styrol basierenden Polymeren mit einer syndiotaktischen Konfiguration,
(d) 95 bis 5 Gew. % eines Polyamids, und
(e) 1 bis 50 Gew. Teile von mindestens einem Block-oder Pfropfcoplymer, ausgewählt aus der aus einem A-B-Blockcopolymer, einem A-gepfropften B-Copolymer und einem B-gepfropften A-Copolymer bestehenden Gruppe, wobei jedes davon modifiziert ist durch Propfpolymerisation einer ungesättigten Carbonsäure oder deren Derivaten, vorausgesetzt daß ein mit Maleinsäureanhydrid modifizierter Styrol-Butadien-Blockcopolymer-Kautschuk (SBS), durch partielle oder komplette Hydrierung des Butadienteils eines mit Maleinsäureanhydrid modifizierten Styrol-Butadien-Blockcopolymeren (SEBS) erhaltene Kautschuks, ein mit Maleinsäureanhydrid modifizierter Styrol-Isopren-Blockcopolymer-Kautschuk (SIS) und durch partielle oder komplette Hydrierung des Isoprenteils eines Styrol-Isopren-Blockcopolymers erhaltene Kautschuks ausgeschlossen sind;
bezogen auf 100 Gew. Teile der obigen Komponenten (a) und (b), (wobei A ein ataktisches Polystyrol darstellt und B mindestens ein Polymer, ausgewählt aus der aus Polybutadien, Polyisopren, hydriertem Polybutadien und hydriertem Polyisopren bestehenden Gruppe).

**5.** Eine auf Styrol basierende Harzzusammensetzung, die umfaßt:
(a) 5 bis 95 Gew. % eines auf Styrol basierenden Polymeren mit einer syndiotaktischen Konfiguration,
(d) 95 bis 5 Gew. % eines Polyamids, und
(e) X Gew. Teile von mindestens einem Block-oder Pfropfcoplymer, ausgewählt aus der aus einem A-B-Blockcopolymer, einem A-gepfropften B-Copolymer und einem B-gepfropften A-Copolymer bestehenden Gruppe, wobei jedes davon modifiziert ist durch Propfpolymerisation einer ungesättigten Carbonsäure oder deren Derivaten, vorausgesetzt daß ein mit Maleinsäureanhydrid modifizierter Styrol-Butadien-Blockcopolymer-Kautschuk (SBS), durch partielle oder komplette Hydrierung des Butadienteils eines mit Maleinsäureanhydrid modifizierten Styrol-Butadien-Blockcopolymeren (SEBS) erhaltene Kautschuks, ein mit Maleinsäureanhydrid modifizierter Styrol-Isopren-Blockcopolymer-Kautschuk (SIS) und durch partielle oder komplette Hydrierung des Isoprenteils eines Styrol-Isopren-Blockcopolymers erhaltene Kautschuks ausgeschlossen sind; und

(f) Y Gew. Teile von mindestens einem Block- oder Pfropfcopolymer, ausgewählt aus der Gruppe, die aus einem A-B-Typ-Blockcopolymer, einem A-gepfropften B-Copolymer und einem B-gepfropften A-Copolymer besteht
(wobei A ein ataktisches Polystyrol darstellt und B mindestens ein Polymer, ausgewählt aus der aus Polybutadien, Polyisopren, hydriertem Polybutadien und hydriertem Polyisopren bestehenden Gruppe darstellt; und X und Y gleichzeitig die Beziehungen erfüllen

1 Gew. Teil ≦ X + Y ≦ 50 Gew. Teile
1 Gew. Teil ≦ X ≦ 50 Gew. Teile, und
0 Gew. Teile ≦ Y ≦ 49 Gew. Teile,)

bezogen auf 100 Gew. Teile der obigen Komponenten (a) und (d).

## Revendications

**1.** Composition de résine qui comprend:
(a) 5 à 95% en poids d'un polymère à base de styrène ayant une configuration syndiotactique;
(b) 95 à 5% en poids d'une résine thermoplastique ayant au moins un groupe polaire choisi parmi un groupe carboxyle, un groupe hydroxyle et un groupe amino à l'extrémité; et
(c) 0,01 à 15 parties en poids d'un copolymère à base de styrène obtenu en copolymérisant un styrène ou un dérivé de styrène avec un composé vinylique ayant un groupe époxy en une quantité telle que la proportion du composé vinylique est 0,01 à 30% en moles, par rapport au copolymère à base de styrène du composant (c), ou un copolymère à base de styrène obtenu en copolymérisant un styrène ou un dérivé de styrène avec un anhydride d'acide carboxylique insaturé en $\alpha,\beta$, à raison de 0,01 à 5% en moles, par rapport à la quantité totale du copolymère, à condition qu'un caoutchouc de copolymère séquencé de styrène-butadiène (SBS) modifié avec de l'anhydride maléique, les caoutchoucs obtenus en hydrogénant partiellement ou complètement la partie butadiène d'un copolymère séquencé de styrène-butadiène (SEBS) modifié avec de l'anhydride maléique, un caoutchouc de copolymère séquencé de styrène-isoprène (SIS) modifié avec de l'anhydride maléique, et les caoutchoucs obtenus en hydrogénant partiellement ou complètement la partie isoprène d'un copolymère séquencé de styrène-isoprène (SEP) modifié avec de l'anhydride maléique, soient exclus;
par rapport à 100 parties en poids des composants ci-dessus (a) et (b).

**2.** Composition de résine selon la revendication 1, dans laquelle ledit copolymère à base de styrène obtenu en copolymérisant un styrène ou un dérivé de styrène avec un composé vinylique ayant un groupe époxy est un copolymère à base de styrène contenant 0,01 à 30% en moles du composé vinylique avec un groupe époxy et ayant une masse moléculaire moyenne en poids de 10 000 à 800 000.

**3.** Composition de résine selon la revendication 1, dans laquelle ledit copolymère à base de styrène obtenu en copolymérisant un styrène ou un dérivé de styrène avec un anhydride d'acide carboxylique insaturé en $\alpha,\beta$ est un copolymère à base de styrène contenant 0,01 à 5% en moles de l'anhydride d'acide carboxylique insaturé en $\alpha,\beta$ et ayant une masse moléculaire moyenne en poids de 10 000 à 800 000.

**4.** Composition de résine à base de styrène qui comprend:
(a) 5 à 95% en poids d'un polymère à base de styrène ayant une configuration syndiotactique;
(d) 95 à 5% en poids d'un polyamide; et
(e) 1 à 50 parties en poids d'au moins un copolymère séquencé ou greffé choisi dans le groupe forme par un copolymère séquencé A-B, un copolymère B greffé par A et un copolymère A greffé par B, dont chacun est modifié en polymérisant par greffage un acide carboxylique insaturé ou ses dérivés, à condition qu'un caoutchouc copolymère séquencé de styrène-butadiène (SBS) modifié avec de l'anhydride maléique, les caoutchoucs obtenus en hydrogénant partiellement ou complètement la partie butadiène d'un copolymère séquencé de styrène-butadiène (SEBS) modifié avec de l'anhydride maléique, un caoutchouc copolymère séquencé de styrène-isoprène (SIS) modifié avec de l'anhydride maléique, et les caoutchoucs obtenus en hydrogénant partiellement ou complètement la partie isoprène d'un copolymère séquencé de styrène-isoprène (SEP) modifié avec de l'anhydride

maléique, soient exclus;
par rapport à 100 parties en poids des composants (a) et (b) ci-dessus, (dans lesquels A représente un polystyrène atactique et B représente au moins un polymère choisi parmi le polybutadiène, le polyisoprène, le polybutadiène hydrogéné et le polyisoprène hydrogéné).

**5.** Composition à base de résine qui comprend:
(a) 5 à 95% en poids d'un polymère à base de styrène ayant une configuration syndiotactique;
(d) 95 à 5% en poids d'un polyamide; et
(e) X parties en poids d'au moins un copolymère séquencé et greffé choisi dans le groupe constitué d'un copolymère séquencé de type A et B, un copolymère B greffé par A et un copolymère A greffé par B, dont chacun est modifié en polymérisant par greffage un acide carboxylique insaturé ou ses dérivés, à condition qu'un caoutchouc copolymère séquencé de styrène-butadiène (SBS) modifié avec de l'anhydride maléique, les caoutchoucs obtenus en hydrogénant partiellement ou complètement la partie butadiène d'un copolymère séquencé de styrène-butadiène (SEBS) modifié avec de l'anhydride maléique, un caoutchouc copolymère séquencé de styrène-isoprène (SIS) modifié avec de l'anhydride maléique, et les caoutchoucs obtenus en hydrogénant partiellement ou complètement la partie isoprène d'un copolymère séquencé de styrène-isoprène (SEP) modifié avec de l'anhydride maléique, soient exclus; et
(f) Y parties en poids d'au moins un copolymère séquencé et greffé choisi dans le groupe constitué d'un copolymère de type A et B, un copolymère B greffé par A et un copolymère A greffé par B (dans lesquels A représente un polystyrène atactique et B représente au moins un polymère choisi parmi le polybutadiène, le polyisoprène, le polybutadiène hydrogéné et le polyisoprène hydrogéné; et X et Y satisfont simultanémentles relations

1 partie en poids $\leqq X + Y \leqq$ 50 parties en poids
1 partie en poids $\leqq X \leqq$ 50 parties en poids, et
0 partie en poids $\leqq Y \leqq$ 49 parties en poids), par

rapport à 100 parties en poids des composants (a) et (d).